# EUROPEAN PATENT SPECIFICATION

(11) **EP 3 747 690 B1**
(45) Date of publication and mention of the grant of the patent: **08.11.2023**
(21) Application number: 20176763.9
(22) Date of filing: 27.05.2020
(51) Int. Cl.: B60L 53/16, B60K 1/04, E05B 47/02, B60K 15/04, E05B 83/28, H01R 13/447, H01R 13/52, H01R 13/70, H01R 13/703, H01R 13/453

(54) **ELECTRICAL CONNECTOR, PARTICULARLY FOR CHARGING ELECTRIC VEHICLES**
ELEKTRISCHER VERBINDER, INSBESONDERE ZUM LADEN VON ELEKTRISCHEN FAHRZEUGEN
CONNECTEUR ÉLECTRIQUE, EN PARTICULIER POUR CHARGER DES VÉHICULES ÉLECTRIQUES

(30) Priority: 04.06.2019 IT 201900008007
(43) Date of publication of application: 09.12.2020
(73) Proprietor: GEWISS S.p.A., 24069 Cenate Sotto (Bergamo) (IT)
(72) Inventor: BOSATELLI, Domenico, 24069 Cenate Sotto (Bergamo) (IT)
(74) Representative: Forattini, Amelia

(56) References cited:
- EP-A1- 2 882 048
- EP-A1- 3 447 849
- US-A- 4 640 564
- US-A1- 2012 234 061
- US-A1- 2013 153 257
- US-A1- 2013 196 522
- US-A1- 2018 366 876

## Description

The present invention relates to an electrical connector.

More particularly, the present invention relates to a vandal-resistant connector/outlet device for charging electric vehicles.

The outlet according to the invention is compliant with the EN 62196 Type 2 standard for power levels up to 22 kW (32A 480V) and ensures an IP XXD degree and an IP55 seal (when the plug is inserted).

As is known, the batteries of electric vehicles are charged by connection to adapted fixed outlets connected to the electrical grid.

Currently commercially available Type 2 connectors are used in outlets ("wall boxes") to charge vehicles in private and public environments, typically in a garage, and in charging points of private, commercial and public parking spaces.

The connectors must comply with the EN 62196 standard, which requires IP XXD protection on the "active contact holes" (phases and neutral), provided by means of systems for disconnection from the electrical grid or by means of shutters.

The EN 62196 standard also provides that the plug must be locked in the outlet, if it is live.

For this purpose, currently commercially available outlets have various and separate mechanisms for performing the various protection and safety functions.

One problem is constituted by protection from vandalism.

For this purpose, Type 2 outlets are known that are provided with vandal-resistant shutters which are operated by means of an actuator which can be unlocked following user authentication; after authentication, it is possible to insert the plug, thereby activating mechanisms that unlock the female contacts from the shutters.

A system for lighting the plug insertion region may also be activated upon authentication.

Also the EN 62196-1 and EN 62196-2 standards provide for the locking of the plug in the outlet if the outlet is live.

US2013/153257 discloses a charging port having a normal charging inlet in a charging port opening portion. A lid covers the charging port opening portion and is openable and closable on a vehicle body. A charging port cover is attached to the lid in an opened state to cover open sections between the charging port opening portion and the lid. The charging port cover is attached to the lid via a lid-side striker serving as an engaging member.

EP3447849A1 discloses a connector for charging electric vehicles, including a receptacle body which has receptacles adapted to receive respective pins of an electrical plug, a lid which can move between a closed position, in which the lid closes hermetically access to the outlet, and an open position, which allows access to the outlet and the insertion of an electrical plug; the connector includes shutters that have at least two positions, a shutter closed position, in which the shutters cover the active receptacles, and a shutter open position, in which the shutters clear the active receptacles for the insertion of the plug pins; the shutters lock the lid in the closed position with a vandalism prevention function.

US4640564A discloses an electrical outlet faceplate with locking closures constituted by a faceplate body having apertures which are aligned with the receptacles of an electrical outlet. A pair of shutters are received between the front plate and inner liner of the body and reciprocate between closed positions in which they block the apertures and open positions in which they are adjacent to the apertures. Springs bias shutters into their closed positions. A lock has a sliding member that is biased by a spring into interlocking engagement with the shutters. A release button is secured to the sliding member and may be pushed laterally to move the sliding member away from the shutters to allow one or both shutters to be moved into their open positions. Each shutter has a projection with a finger tab for moving the shutter against the force of the springs. The projection has a stepped configuration to allow the shutter to be held open by a finger without obstructing the aperture.

The aim of the present invention is to improve the mechanism that provides the vandal-resistant function of an electrical connector, particularly for charging electric vehicles.

Within the scope of this aim, an object of the invention is to provide a connector that has a single mechanism with a vandal-resistant function and designed to lock the plug in the inserted position during use and to protect the connector when it is not in use, i.e. when the plug is extracted.

A further object of the invention is to provide a connector that allows easy and straightforward insertion of the plug.

A further object of the invention is to provide a connector that has a compact construction and can be used easily in various types of charging facility.

A further object of the present invention is to provide a connector which, by virtue of its particular constructive characteristics, is capable of giving the greatest assurances of reliability and safety in use.

This aim and these and other objects which will become better apparent hereinafter are achieved by an electrical connector as claimed in the appended claims.

Further characteristics and advantages will become better apparent from the description of preferred but not exclusive embodiments of the invention, illustrated by way of nonlimiting example in the accompanying drawings, wherein:
Figure 1 is a partially cutout perspective view, showing the front part of the connector, in the release position of the locking frame;
Figure 2 is a partially cutout perspective view, showing the front part of the connector, in the locking position of the locking frame;
Figure 3 is a front perspective view of the connector, without the locking frame and showing the shutters in the open position;
Figure 4 is a partially cutout perspective view of the connector with the plug inserted;

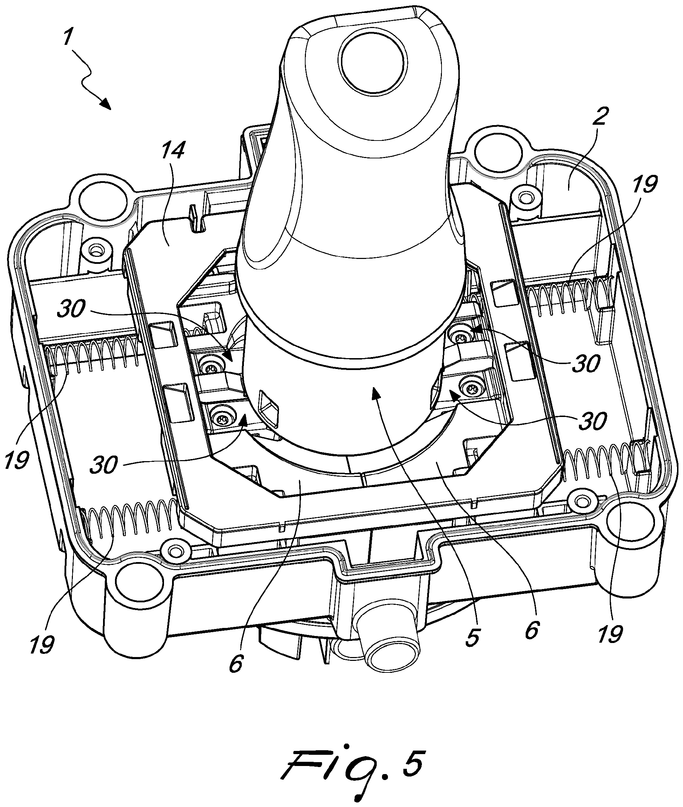

Figure 5 is a partially cutout perspective view of the connector without the front cover of the casing and with the plug inserted;
Figure 6 is a partially exploded front perspective view of the connector, without the locking frame and with the shutters in the closed position;

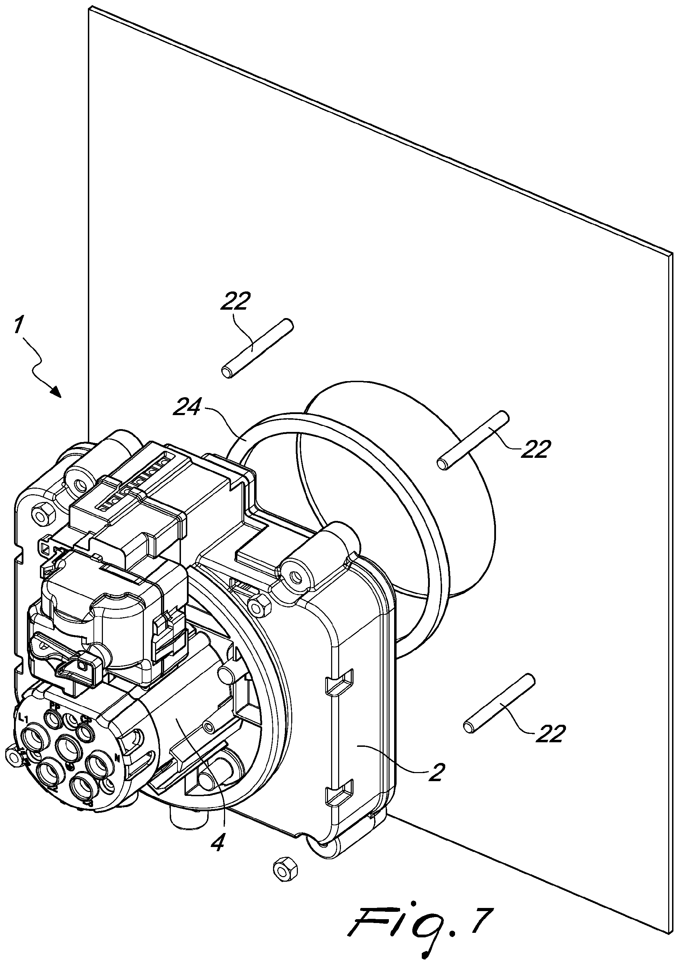

Figure 7 is a perspective view of the rear part of the electrical connector according to the present invention.

With reference to the cited figures, the electrical connector according to the invention, designated generally by the reference numeral 1, includes a casing 2 provided with a front opening 3 and adapted to receive a female contact body 4, at the rear. A plug 5 can be inserted in the front opening 3 and engaged in the female contact body 4.

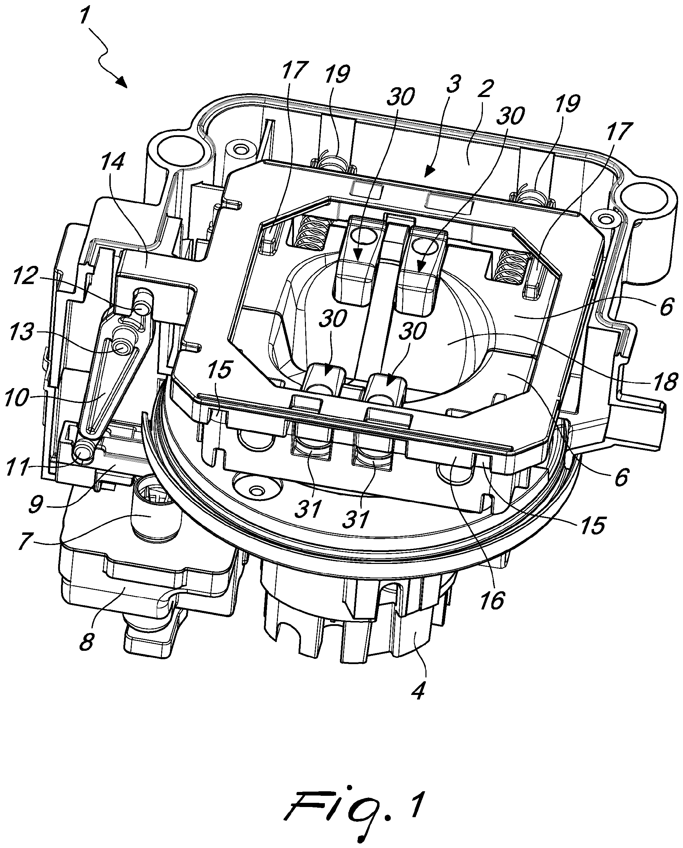

The female contacts of the female contact body 4 are protected by a pair of shutters 6 that prevent access to the female contacts when the shutters 6 are in the closed position, shown in Figures 1, 2, 6.

According to the present invention, the connector includes a locking mechanism which controls the opening of the shutters and the locking of the plug 5 when it is inserted in the female contact body 4.

The locking mechanism includes a lever 7, which is actuated by an actuation motor 8 and moves a carriage 9 which in turn act on a first end 11 of a rocker 10 which is pivoted in the fulcrum 13 in the casing 2 and has a second end 12 that acts on a locking frame 14.

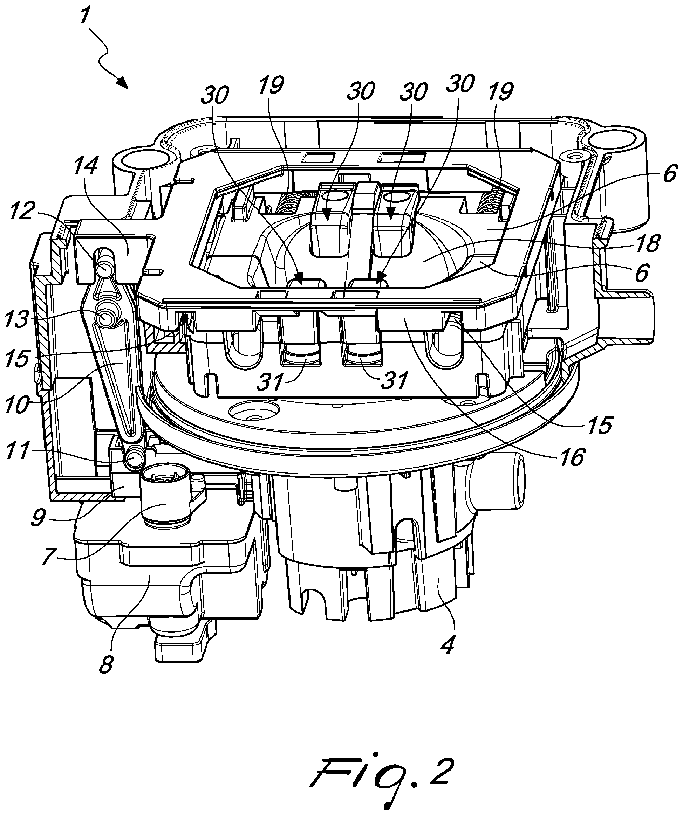

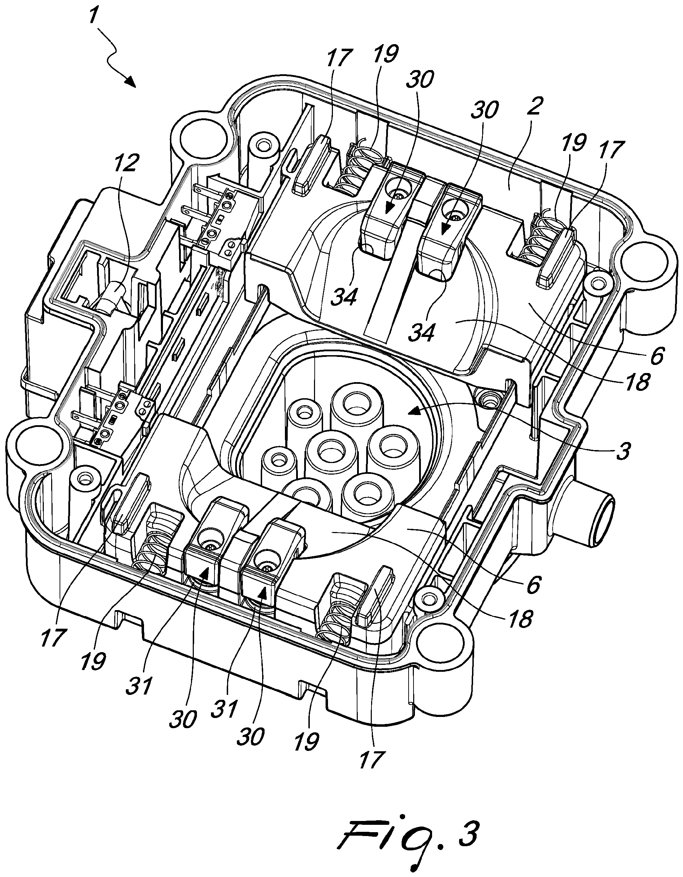

The locking frame 14 can move transversely to the movement direction of the two shutters 6 and prevents or allows their opening, depending on whether it is in the unlocked position, visible in Figures 2, 3, or in the locking position, visible in Figure 1.

For this purpose, the locking frame 14 is provided with side notches 15 which are formed in a side edge 16; in the unlocked position, the side notches 15 allow teeth 17 of the shutters to pass through the shutters and therefore allow the shutters 6 to translate into their open position.

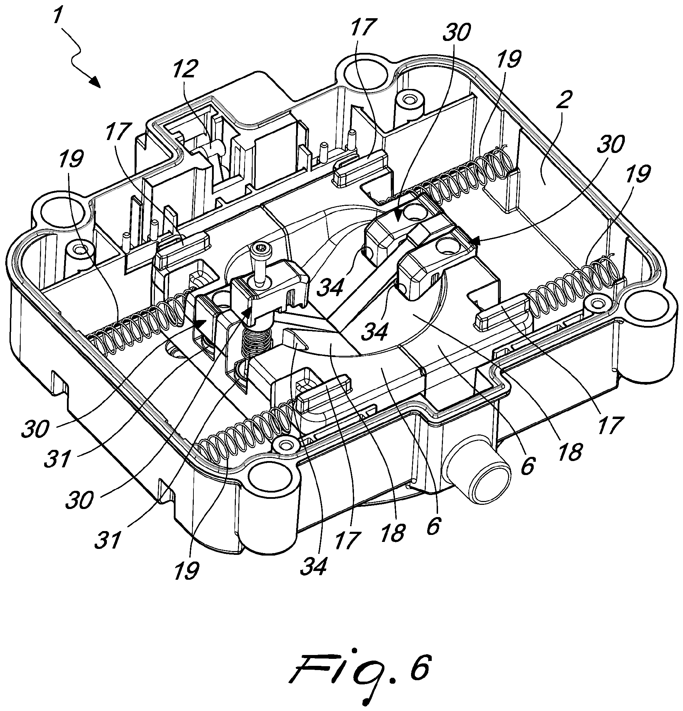

With particular reference to Figures 3 and 6, which show the inlet region of the plug 5 without the locking frame 14, both shutters 6 can translate laterally, moved by the plug 5, which, during insertion, acts on inclined planes 18 formed in the shutters 6.

According to the present invention, the connector includes a locking mechanism which includes four locking buttons 30, two for each shutter 6, which are inserted in respective seats 34 formed in the shutters 6.

Each button 30 is provided with a return spring 31.

The buttons 30 are actuated simultaneously by the plug 5 when it is inserted. By entering the respective seats 34, the buttons release the locking frame 14, allowing the shutters 6 to slide, as described above.

The buttons 30 are returned to the locking position of the frame by the return springs 31.

The shutters 6 slide on horizontal guides and, during the extraction of the plug, are returned to the closed position by compression springs 19.

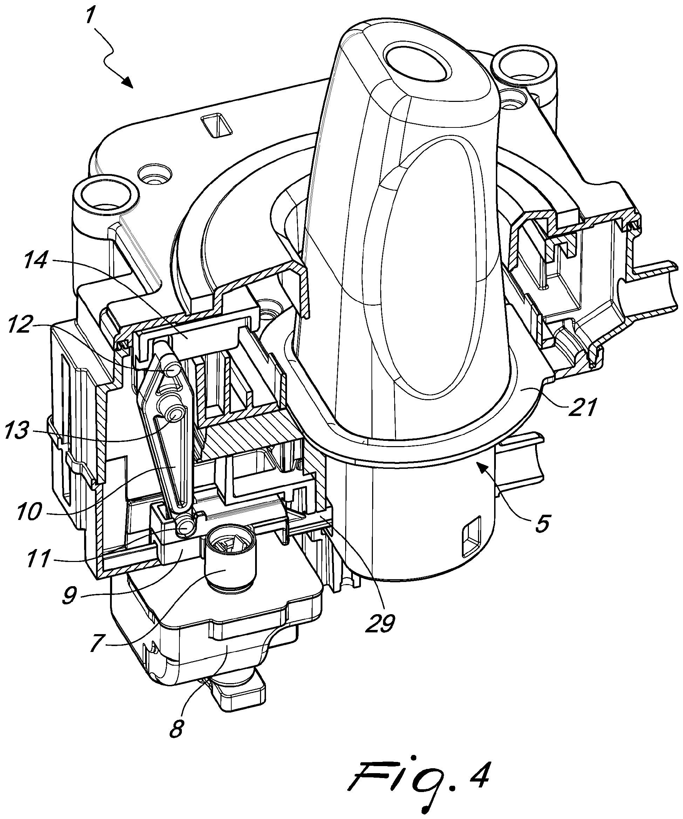

As can be seen in Figure 4, the carriage 9 also performs the function of locking the plug in the inserted position during the vehicle charging.

The free end 29 of the carriage 9, i.e. the end that lies opposite the end that acts on the first end 11 of the rocker 10, can in fact engage an adapted seat formed in the body of the plug 5, preventing its extraction.

Advantageously, the shutters 6 are made of transparent material and can diffuse the light emitted by a light source 20 that turns on when the system is activated.

The connector according to the invention also includes a lip-shaped gasket 21, shown in Figure 4, which is molded over the casing 2 and has the function of ensuring the IP rating when the plug is inserted.

The connector 1 is fitted to the electric vehicle charging system with the aid of four threaded stems 22 which are welded inside a wall 23 of the charging system.

The IP seal between the plug and the electric vehicle charging system is insured by an adapted interposed gasket 24.

In practice it has been found that the invention achieves the intended aim and objects, by providing a connector, particularly for charging electric vehicles, which, by using only the actuator for locking the plug, also performs the vandalism prevention function, allowing, by means of the use of the particular mechanism, the locking of the shutters in the closed position when the plug is not inserted.

The shutters, appropriately lit when the user requests charging, make it easy to identify the plug insertion region.

By means of buttons arranged on the shutters, the locking system allows to prevent the sliding of the shutters and therefore their opening unless a plug is inserted, by virtue of the interference of the buttons between the shutters and the locking frame.

The button-based locking system therefore ensures that, even if the frame has been released, access to the receptacles is possible only by inserting a plug, which acts on the buttons in order to allow the sliding of the shutters with respect to the locking frame.

The connector according to the present invention is compliant with the EN 62196 Type 2 standard, for power ratings up to 22 kW (32A 480 V), and ensures the IP XXD rating, by virtue of the shutters 6, and the IP55 seal, when the plug is inserted, by means of the lip-shaped gasket 21.

The materials used, as well as the dimensions, may of course be any according to the requirements and the state of the art.

## Claims

1. An electrical connector comprising a casing (2) provided with a front opening (3) and adapted to receive at the rear a female contact body (4) in which a plug (5) inserted in the front opening (3) can engage; the female contacts of said female contact body (4) being protected by a pair of shutters (6), which prevent access to said female contacts when said shutters (6) are in the closed position; said connector comprising a locking mechanism which controls the opening of the shutters (6) and the locking of the plug (5) when it is inserted in the female contact body (4); said locking mechanism being adapted to lock and unlock the movement of said shutters (6) and defining at least one locking position and at least one unlocked position; said locking mechanism preventing or allowing the movement of said shutters (6) respectively in said locking or unlocked position; said connector being **characterized in that** said locking mechanism comprises a locking frame (14) movable transversely with respect to the direction of motion of said shutters (6); each of said shutters (6) comprising at least one locking button (30); each one of said locking buttons (30) defining an interference position, which prevents said movement of said shutter (6) with respect to said locking frame (14), and a noninterference position, which allows the movement of said shutter (6) with respect to said locking frame (14); each one of said locking buttons (30) being made to pass from said interference position to said noninterference position by inserting said plug (5); said locking mechanism comprising a lever (7) actuated by an actuation motor (8); said lever (7) moving a carriage (9); said carriage (9) acting on a first end (11) of a rocker (10); said rocker (10) being pivoted in a fulcrum (13) in said casing (2) and having a second end (12) that acts on said locking frame (14).

2. The connector according to claim 1, **characterized in that** said locking mechanism comprises four locking buttons (30), two for each shutter (6), which are inserted in said shutters (6) and are each provided with a return spring (31); said buttons (30) being arranged in seats (34) formed in said shutters (6) and being returned to said interference position by said return springs (31); in said interference position, each locking button (30) preventing said shutter (6) from sliding with respect to the frame (14).

3. The connector according to claim 1, **characterized in that** said locking frame (14) has lateral notches (15) formed in a lateral edge (16); in said unlocked position said lateral notches (15) allowing the teeth of said shutters (6) to pass through them, thus allowing the shutters (6) to translate to the open position.

4. The connector according to claim 3, **characterized in that** said shutters (6) can translate laterally, removed by said plug (5), which during insertion acts on inclined planes (18) formed in said shutters (6).

5. The connector according to claim 4, **characterized in that** said shutters (6) slide along horizontal guides and, during the extraction of said plug (5), are returned to the closed position by compression springs (19).

6. The connector according to claim 1, **characterized in that** said carriage (9) has a free end (29) that is opposite the end that acts on said first end (11) of said rocker (10); said free end (29) being adapted to engage a seat formed in the body of said plug (5), preventing its extraction.

7. The connector according to claim 1, **characterized in that** said shutters (6) are made of a transparent material and diffuse the light emitted by a light source (20) that turns on when the system is activated.

8. The connector according to claim 1, **characterized in that** it comprises a lip-shaped gasket (21) that is overmolded on said casing (2) at said opening (3).

## Patentansprüche

1. Ein elektrisches Verbindungselement, das ein Gehäuse (2) umfasst, welches mit einer vorderen Öffnung (3) versehen und ausgebildet ist, um an der Rückseite einen Buchsenverbindungskörper (4) aufzunehmen, in den ein in die vordere Öffnung (3) eingesetzter Stecker (5) eingreifen kann; wobei die Buchsenkontakte des Buchsenverbindungskörpers (4) durch ein Paar von Klappen (6) geschützt sind, die den Zugriff auf die Buchsenkontakte verhindern, wenn die Klappen (6) sich in der geschlossenen Position befinden; wobei das Verbindungselement einen Verriegelungsmechanismus umfasst, der das Öffnen der Klappen (6) und das Blockieren des Steckers (5), wenn er in den Buchsenverbindungskörper (4) eingesetzt ist, kontrolliert; wobei der Verriegelungsmechanismus ausgebildet ist, um die Bewegung der Klappen (6) zu verriegeln und zu entriegeln, und mindestens eine Verriegelungsposition und mindestens eine entriegelte Position bestimmt; wobei der Verriegelungsmechanismus die Bewegung der Klappen (6) in der Verriegelungsposition oder der entriegelten Position verhindert beziehungsweise gestattet; wobei das Verbindungselement **dadurch gekennzeichnet ist, dass** der Verriegelungsmechanismus einen Verriegelungsrahmen (14) umfasst, der transversal mit Bezug auf die Bewegungsrichtung der Klappen (6) beweglich ist; wobei jede der Klappen (6) mindestens einen Verriegelungsknopf (30) umfasst; wobei jeder der Verriegelungsknöpfe (30) eine Interferenzposition bestimmt, die die Bewegung der Klappe (6) mit Bezug auf den Verriegelungsrahmen (14) verhindert, und eine Nicht-Interferenzposition, die die Bewegung der Klappe (6) mit Bezug auf den Verriegelungsrahmen (14) gestattet; wobei jeder der Verriegelungsknöpfe (30) durch Einstecken des Steckers (5) dazu gebracht wird, von der Interferenzposition in die Nicht-Interferenzposition zu wechseln; wobei der Verriegelungsmechanismus einen von einem Antriebsmotor (8) angetriebenen Hebel (7) umfasst; wobei der Hebel (7) einen Schlitten (9) bewegt; wobei der Schlitten (9) auf ein erstes Ende (11) eines Kipphebels (10) einwirkt; wobei der Kipphebel (10) drehgelenkig an einem Hebeldrehpunkt (13) in dem Gehäuse (2) gelagert ist und ein zweites Ende (12) hat, das auf den Verriegelungsrahmen (14) einwirkt.

2. Das Verbindungselement gemäß Anspruch 1, **dadurch gekennzeichnet, dass** der Verriegelungsmechanismus vier Verriegelungsknöpfe (30), zwei für jede Klappe (6), umfasst, die in die Klappen (6) eingesetzt und jeweils mit einer Rückstellfeder (31) ausgestattet sind; wobei die Knöpfe (30) in Sitzen (34) angeordnet sind, die in den Klappen (6) geformt sind, und von den Rückstellfedern (31) in die Interferenzposition zurückgebracht werden; wobei in der Interferenzposition jeder Verriegelungsknopf (30) die Klappe (6) daran hindert, mit Bezug auf den Rahmen (14) zu gleiten.

3. Das Verbindungselement gemäß Anspruch 1, **dadurch gekennzeichnet, dass** der Verriegelungsrahmen (14) in einer Seitenkante (16) geformte seitliche Kerben (15) hat; wobei die seitlichen Kerben (15) in der entriegelten Position das Hindurchdringen der Zähne der Klappen (6) durch sie gestatten und es so den Klappen (6) ermöglichen, sich in die offene Position zu bewegen.

4. Das Verbindungselement gemäß Anspruch 3, **dadurch gekennzeichnet, dass** die Klappen (6) sich seitlich bewegen können, entfernt durch den Stecker (5), der während des Einsetzens auf schräge Ebenen (18) einwirkt, die in den Klappen (6) geformt sind.

5. Das Verbindungselement gemäß Anspruch 4, **dadurch gekennzeichnet, dass** die Klappen (6) entlang horizontaler Führungen gleiten und während des Herausziehens des Steckers (5) von Druckfedern (19) wieder in die geschlossene Position gebracht werden.

6. Das Verbindungselement gemäß Anspruch 1, **dadurch gekennzeichnet, dass** der Schlitten (9) ein freies Ende (29) hat, das dem Ende gegenüberliegt, welches auf das erste Ende (11) des Kipphebels (10) einwirkt; wobei das freie Ende (29) ausgebildet ist, um in einen Sitz einzugreifen, der in dem Körper des Steckers (5) geformt ist, und so sein Herausziehen zu verhindern.

7. Das Verbindungselement gemäß Anspruch 1, **dadurch gekennzeichnet, dass** die Klappen (6) aus einem transparenten Material bestehen und das Licht streuen, das von einer Lichtquelle (20) emittiert wird, welche sich einschaltet, wenn das System aktiviert wird.

8. Das Verbindungselement gemäß Anspruch 1, **dadurch gekennzeichnet, dass** es eine lippenförmige Dichtung (21) umfasst, die an der Öffnung (3) auf dem Gehäuse (2) überformt ist .

## Revendications

1. Connecteur électrique comprenant un boîtier (2) pourvu d'une ouverture avant (3) et adapté pour recevoir à l'arrière un corps de contact femelle (4) dans lequel peut s'engager une fiche (5) insérée dans l'ouverture avant (3); les contacts femelles dudit corps de contact femelle (4) étant protégés par une paire d'obturateurs (6), qui empêchent l'accès auxdits contacts femelles quand lesdits obturateurs (6) sont en position fermée; ledit connecteur comprenant un mécanisme de verrouillage qui commande l'ouverture des obturateurs (6) et le verrouillage de la fiche (5) quand elle est insérée dans le corps de contact femelle (4); ledit mécanisme de verrouillage étant adapté pour verrouiller et déverrouiller le mouvement desdits obturateurs (6) et définissant au moins une position de verrouillage et au moins une position déverrouillée; ledit mécanisme de verrouillage empêchant ou autorisant le mouvement desdits obturateurs (6) respectivement dans ladite position de verrouillage ou dans ladite position déverrouillée; ledit connecteur étant **caractérisé en ce que** ledit mécanisme de verrouillage comprend un bloc de verrouillage (14) mobile transversalement par rapport à la direction de déplacement desdits obturateurs (6); chacun desdits obturateurs (6) comprenant au moins un bouton de verrouillage (30); chacun desdits boutons de verrouillage (30) définissant une position d'interférence, qui empêche ledit mouvement dudit obturateur (6) par rapport audit bloc de verrouillage (14), et une position de non-interférence, qui permet le mouvement dudit obturateur (6) par rapport audit bloc de verrouillage (14); chacun desdits boutons de verrouillage (30) étant amené à passer de ladite position d'interférence à ladite position de non-interférence en insérant ladite fiche (5); ledit mécanisme de verrouillage comprenant un levier (7) actionné par un moteur d'actionnement (8); ledit levier (7) déplaçant un chariot (9); ledit chariot (9) agissant sur une première extrémité (11) d'un basculeur (10); ledit basculeur (10) pivotant sur un pivot (13) dans ledit boîtier (2) et ayant une deuxième extrémité (12) qui agit sur ledit bloc de verrouillage (14).

2. Connecteur selon la revendication 1, **caractérisé en ce que** ledit mécanisme de verrouillage comprend quatre boutons de verrouillage (30), deux pour chaque obturateur (6), qui sont insérés dans lesdits obturateurs (6) et sont chacun pourvus d'un ressort de renvoi (31); lesdits boutons (30) étant agencés dans des sièges (34) formés dans lesdits obturateurs (6) et renvoyés dans ladite position d'interférence par lesdits ressorts de renvoi (31); chaque bouton de verrouillage (30) empêchant, dans ladite position d'interférence, ledit obturateur (6) de coulisser par rapport au bloc (14).

3. Connecteur selon la revendication 1, **caractérisé en ce que** ledit bloc de verrouillage (14) comporte des encoches latérales (15) formées dans un bord latéral (16); lesdites encoches latérales (15) permettant, dans ladite position déverrouillée, aux dents desdits obturateurs (6) de les traverser, permettant ainsi aux obturateurs (6) de se translater jusqu'à la position ouverte.

4. Connecteur selon la revendication 3, **caractérisé en ce que** lesdits obturateurs (6) peuvent se translater latéralement lorsqu'ils sont retirés par ladite fiche (5), qui lors de l'insertion agit sur des plans inclinés (18) formés dans lesdits obturateurs (6).

5. Connecteur selon la revendication 4, **caractérisé en ce que** lesdits obturateurs (6) coulissent le long de guides horizontaux et, lors de l'extraction de ladite fiche (5), sont renvoyés en position fermée par des ressorts de compression (19).

6. Connecteur selon la revendication 1, **caractérisé en ce que** ledit chariot (9) comporte une extrémité libre (29) qui est opposée à l'extrémité qui agit sur ladite première extrémité (11) dudit basculeur (10); ladite extrémité libre (29) étant adaptée pour s'engager dans un siège formé dans le corps de ladite fiche (5), empêchant son extraction.

7. Connecteur selon la revendication 1, **caractérisé en ce que** lesdits obturateurs (6) sont réalisés en un matériau transparent et diffusent la lumière émise par une source lumineuse (20) qui s'allume quand le système est activé.

8. Connecteur selon la revendication 1, **caractérisé en ce qu'**il comprend un joint en forme de lèvre (21) qui est surmoulé sur ledit boîtier (2) au niveau de ladite ouverture (3).
